# EUROPEAN PATENT APPLICATION

(11) **EP 2 713 179 A1**
(43) Date of publication of application: **02.04.2014**
(21) Application number: 13790751.5
(22) Date of filing: 01.05.2013
(51) Int. Cl.: G01S 5/12, H04W 64/00

(54) **BASE STATION POSITIONING DEVICE, BASE STATION POSITIONING METHOD, AND BASE STATION POSITIONING PROGRAM**

(30) Priority: 17.05.2012 JP 2012113231
(71) Applicant: NTT Docomo, Inc., Tokyo 100-6150 (JP)
(72) Inventor: SUZUKI, Takashi, Tokyo 100-6150 (JP)
(74) Representative: Sparing Röhl Henseler
(86) International application number: PCT/JP2013/002903
(87) International publication number: WO 2013/171993

(57) **Abstract**

There is provided a base station positioning apparatus, a base station positioning method, and a base station positioning program for reducing an error in a transverse direction with respect to a direction from a base station toward a barycentric position of a cell of the base station when a position of a mobile terminal is estimated in the time-of-arrival positioning method. A correction candidate area specifying unit (66) calculates a difference between: an RSRP for each area acquired by a quality data acquiring unit (65) in the case where the interior of a service area is divided into areas with the same radio wave intensities; and an RSRP received by a radio wave intensity acquiring unit (62) when an MT (50) receives a signal. An area where the difference is within a predetermined threshold value is specified as a correction candidate area among the divided areas. In the case where an area (82) to be a correction candidate area is present at a position on an arc "b", the position correcting unit (67) corrects a position (51) of the MT (50) estimated by a position estimating unit (64) to a position (52) on the arc "b" within the area (82) as the correction candidate area.

## Description

### Technical Field

The present invention relates to a base station positioning apparatus, a base station positioning method, and a base station positioning program. More particularly, the present invention relates to a base station positioning apparatus, a base station positioning method, and a base station positioning program for estimating a position of a mobile terminal in a time-of-arrival positioning method, which is one of the base station positioning methods.

### Background Art

In these years, there are various positioning methods such as a global positioning system (GPS) positioning method, a positioning method by a wireless local area network (LAN) connection service, a base station positioning method, and the like. For example, a radio wave positioning apparatus in Patent Document 1 described below employs the time-of-arrival positioning method (TA positioning method) as a base station positioning method. The TA (TA: Time of Arrival) positioning method estimates a position of a mobile terminal based on the time of arrival of a signal transmitted and received between a base station and a mobile terminal, which constitute a wireless communication network system.

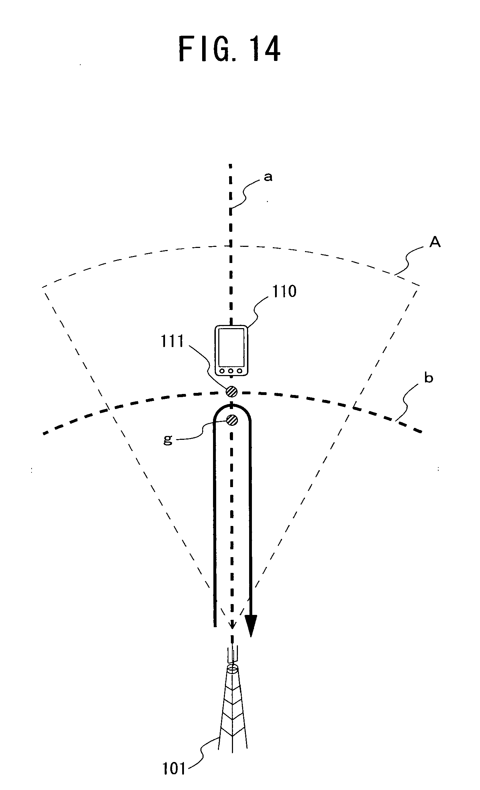

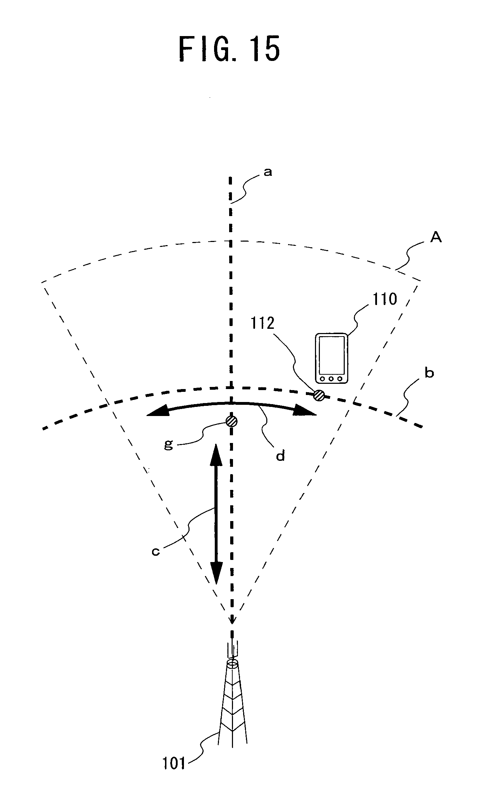

FIG. 14 and FIG. 15 are schematic diagrams illustrating a procedure for estimating a position of a mobile terminal in the time-of-arrival positioning method. The time-of-arrival positioning method described above is a method for estimating a position of a mobile terminal in the following procedure. Firstly, calculated is a difference between a received-signal intensity (i.e. RSRP: Reference Signal Received Power) in a cell of a serving base station, which is the base station managing the cell where the mobile terminal is located, and an RSRP in a cell of an adjacent base station, which is a base station adjacent to the serving base station. The above-described RSRP is one of quality data, and indicates the intensity of a radio wave when the mobile terminal receives a signal transmitted from the serving base station.

If there is no cell of an adjacent base station that a difference between the two calculated RSRPs is within a predetermined threshold value, as illustrated in FIG. 14, a position 111 of a mobile terminal (MT) 110, which is a mobile terminal to be a positioning target, is estimated based on an arrival time, i.e. a time of arrival of the signal at a serving base station 101 in a cell "A" of the serving base station 101. The above-described arrival time of the signal is a period of time from when a signal is transmitted from the serving base station 101, and after the signal is received at the MT 110, to when a signal transmitted from the MT 110 is received at the serving base station 101.

Especially, the time-of-arrival positioning method allows accurate detection of a distance from the position of the serving base station 101 to the position of the MT 110. Therefore, the method specifies a straight line "a" passing through two points of a barycentric position (GAI: Geographical Area) "g" of the cell "A" and the position of the serving base station 101. Furthermore, the method calculates an arc "b" that has the center at the position of the serving base station 101 and a radius that is a distance from the position of the serving base station 101 to the position of the MT 110. Accordingly, a position where the straight line "a" and the arc "b" intersect with each other is estimated to be the position 111 of the MT 110.

### Prior Art Documents

### Patent Documents

Patent Document 1: JP 2004-093341 A

### Summary of the Invention

### Problems to be Solved

In the above-described time-of-arrival positioning method, in the case where the position of the MT 110 is located on the straight line "a" passing through the two points of the barycentric position "g" of the cell "A" and the position of the serving base station 101, the position of the MT 110 can be accurately estimated.

However, the MT 110 is not always present at the position on the straight line "a". As illustrated in FIG. 15, for example, showing a case where the MT 110 is not present at the position on the straight line "a". In this case, the position of the MT 110 cannot be accurately estimated unlike the case where the MT 110 is present at the position on the straight line "a". That is, the position of the MT 110 estimated in the time-of-arrival positioning method may have an error in a transverse direction (a direction indicated by an arrow "d" in the drawing) of the arc "b" with respect to a direction (a direction indicated by an arrow "c" in the drawing) of the straight line "a" passing through the two points of the barycentric position "g" of the cell "A" and the position of the serving base station 101 from the serving base station 101.

The present invention has been made in order to address the drawbacks described above, and it is an object of the present invention to provide a base station positioning apparatus, a base station positioning method, and a base station positioning program for reducing an error in the transverse direction with respect to a direction from the base station toward the barycentric position of the cell of the base station when the position of the mobile terminal is estimated in the time-of-arrival positioning method, which is one of the base station positioning methods.

### Solution to the Problem

In order to achieve the above object, a base station positioning apparatus, a base station positioning method, and a base station positioning program, according to the present invention, are configured as follows.

According to an aspect of the present invention, there is provided a base station positioning apparatus comprising: a time-of-arrival acquiring unit configured to acquire a time of arrival of a signal transmitted and received between a base station and a mobile terminal that constitute a wireless communication network system; a radio wave intensity acquiring unit configured to acquire a radio wave intensity of the signal occurring when the mobile terminal receives the signal that has been transmitted to the base station from the mobile terminal; a distance estimating unit configured to estimate a distance from a position of the base station to a position of the mobile terminal based on the time of arrival acquired by the time-of-arrival acquiring unit; a position estimating unit configured to specify an arc that has a center at the position of the base station and a radius that is the distance estimated by the distance estimating unit, specify a straight line connecting the position of the base station and a barycentric position of a cell of the base station, and estimate a position at an intersection point between the arc and the straight line to be the position of the mobile terminal; a quality data acquiring unit configured to acquire a radio wave intensity for each area in a case where an interior of a service area of the wireless communication network system is divided into areas with same radio wave intensities, respectively; a correction candidate area specifying unit configured to calculate a difference between the radio wave intensity for the each area acquired by the quality data acquiring unit in the case where the interior of the service area is divided into the areas with the same radio wave intensities, and the radio wave intensity of the signal occurring when the mobile terminal receives the signal acquired by the radio wave intensity acquiring unit, and specify an area where the difference is within a predetermined threshold value as a correction candidate area; and a position correcting unit configured to correct the position of the mobile terminal estimated by the position estimating unit to a position on the arc within the correction candidate area in a case where the correction candidate area specified by the correction candidate area specifying unit is present at a position on the arc.

According to the above-described base station positioning apparatus, when the positioning operation process for operating the location information (the latitude-longitude information) of the mobile terminal, which is the positioning target, in the time-of-arrival positioning method, the position of the mobile terminal is estimated and the estimated position of the mobile terminal is corrected.

The correction candidate area specifying unit may perform a specifying process to specify an area where the difference is within the predetermined threshold value as the correction candidate area in a case where the number of the radio wave intensities acquired by the quality data acquiring unit is equal to or greater than the predetermined threshold value, and may not to perform the specifying process in a case where the number of the radio wave intensities acquired by the quality data acquiring unit is smaller than the predetermined threshold value.

With such a configuration, when the number of samples of the quality data is insufficient and is smaller than a predetermined threshold value, the number of samples is insufficient to estimate the correction candidate area. It is therefore possible not to correct the position of the mobile terminal and not to degrade the reliability of the estimated position.

The position estimating unit is configured to specify an arc that has a center at the position of the base station and a radius that is the distance estimated by the distance estimating unit, specify a straight line connecting the position of the base station and a barycentric position of a cell of the base station, and estimate a position at an intersection point to be the position of the mobile terminal.

In addition, the correction candidate area specifying unit is configured to calculate a difference between the radio wave intensity for the each area (RSRP) acquired by the quality data acquiring unit in the case where the interior of the service area is divided into the areas with the same radio wave intensities, and the radio wave intensity of the signal occurring when the mobile terminal receives the signal acquired by the radio wave intensity acquiring unit. Then, the correction candidate area specifying unit specifies an area where the difference in intensity between the two received radio waves is within a predetermined threshold value as a correction candidate area, from among the divided areas with the same radio wave intensities.

Then, the position correcting unit is configured to correct the position of the mobile terminal estimated by the position estimating unit to a position on the arc within the correction candidate area in a case where the correction candidate area specified by the correction candidate area specifying unit is present at a position on the arc.

Accordingly, it is possible to suppress an error the location information generated in the transverse direction with respect to the direction from the base station toward the barycentric position of the cell of the base station. Accordingly, the position of the mobile terminal can be accurately estimated regardless of the position of the mobile terminal within the cell.

The position correcting unit may correct the position of the mobile terminal estimated by the position estimating unit to the position on the arc within the correction candidate area at a closest distance from the position of the mobile terminal in a case where a plurality of the correction candidate areas specified by the correction candidate area specifying unit are present at positions on the arc.

With such a configuration, in some cases, not only one area but also several correction candidate areas specified by the correction candidate area specifying unit are present at the position on the arc. In such cases, it is possible to correct to a position on the arc within the correction candidate area at the closest distance from the estimated position of the mobile terminal.

In addition, in a case where a plurality of the correction candidate areas specified by the correction candidate area specifying unit are present at positions on the arc, the position correcting unit may correct the position of the mobile terminal estimated by the position estimating unit to the position at the center on the arc connecting respective ends of the plurality of the correction candidate areas.

With such a configuration, when there are several correction candidate areas specified by the correction candidate area specifying unit, it is possible to correct to an appropriate position.

Furthermore, in a case where a plurality of the correction candidate areas specified by the correction candidate area specifying unit are present at positions on the arc, the position correcting unit corrects the position of the mobile terminal estimated by the position estimating unit to the position of an intersection point between a straight line connecting a center of gravity in an area combining the plurality of the correction candidate areas and the position of the base station together, and the arc.

With such a configuration, when there are several correction candidate areas specified by the correction candidate area specifying unit, it is possible to correct to an appropriate position.

In the base station positioning apparatus according to an aspect of the present invention, the radio wave intensity for the each area acquired by the quality data acquiring unit in the case where the interior of the service area is divided into the areas with the same radio wave intensities may be acquired when a positioning operation process in a GPS (Global Positioning System) positioning method is performed.

With such a configuration, for example, it is necessary to hold the above-described quality data beforehand in the quality data management server or the like that is one of the apparatuses constituting the wireless communication network system 10. For this reason, for example, the GPS positioning operation process is performed in the GPS positioning method to hold quality data including the longitude and latitude of the mobile terminal acquired in the GPS positioning operation process, the RSRP of the signal at the mobile terminal, and quality data including an identifier (a cell ID) and the like for identifying the cell, in the quality data management server or the like. With the use of the quality data, it is possible to correct the position of the mobile terminal estimated by the position estimating unit.

According to an aspect of the present invention, there is provided a base station positioning method comprising: acquiring a time of arrival of a signal transmitted and received between a base station and a mobile terminal that constitute a wireless communication network system; acquiring a radio wave intensity of the signal occurring when the mobile terminal receives the signal that has been transmitted to the base station from the mobile terminal; estimating a distance from a position of the base station to a position of the mobile terminal based on the time of arrival acquired; specifying an arc that has a center at the position of the base station and a radius that is the distance estimated, specifying a straight line connecting the position of the base station and a barycentric position of a cell of the base station, and estimating a position at an intersection point between the arc and the straight line to be the position of the mobile terminal; acquiring a radio wave intensity for each area in a case where an interior of a service area of the wireless communication network system is divided into areas with same radio wave intensities, respectively; calculating a difference between the radio wave intensity for the each area acquired in the case where the interior of the service area is divided into the areas with the same radio wave intensities, and the radio wave intensity of the signal occurring when the mobile terminal receives the signal acquired, and specify an area where the difference is within a predetermined threshold value as a correction candidate area; and correcting the position of the mobile terminal estimated to a position on the arc within the correction candidate area in a case where the correction candidate area specified is present at a position on the arc.

According to the above-described base station positioning method, by performing each process step as described above, it is possible to suppress an error the location information generated in the transverse direction with respect to the direction from the base station toward the barycentric position of the cell of the base station. Accordingly, the position of the mobile terminal can be accurately estimated regardless of the position of the mobile terminal within the cell.

According to an aspect of the present invention, there is provided a base station positioning program that causes a computer to function as: a time-of-arrival acquiring unit configured to acquire a time of arrival of a signal transmitted and received between a base station and a mobile terminal that constitute a wireless communication network system; a radio wave intensity acquiring unit configured to acquire a radio wave intensity of the signal occurring when the mobile terminal receives the signal that has been transmitted to the base station from the mobile terminal; a distance estimating unit configured to estimate a distance from a position of the base station to a position of the mobile terminal based on the time of arrival acquired by the time-of-arrival acquiring unit; a position estimating unit configured to specify an arc that has a center at the position of the base station and a radius that is the distance estimated by the distance estimating unit, specify a straight line connecting the position of the base station and a barycentric position of a cell of the base station, and estimate a position at an intersection point between the arc and the straight line to be the position of the mobile terminal; a quality data acquiring unit configured to acquire a radio wave intensity for each area in a case where an interior of a service area of the wireless communication network system is divided into areas with same radio wave intensities, respectively; a correction candidate area specifying unit configured to calculate a difference between the radio wave intensity for the each area acquired by the quality data acquiring unit in the case where the interior of the service area is divided into the areas with the same radio wave intensities, and the radio wave intensity of the signal occurring when the mobile terminal receives the signal acquired by the radio wave intensity acquiring unit, and specify an area where the difference is within a predetermined threshold value as a correction candidate area; and a position correcting unit configured to correct the position of the mobile terminal estimated by the position estimating unit to a position on the arc within the correction candidate area in a case where the correction candidate area specified by the correction candidate area specifying unit is present at a position on the arc.

According to the above-described base station positioning program, by performing the above-described base station positioning program in the apparatuses constituting the wireless communication network system, it is made possible to obtain the same effects with those of the base station positioning apparatus and the base station positioning method as described above.

### Advantageous Effects of the Invention

According to the present invention, the correction candidate area specifying unit calculates a difference between: the radio wave intensity received by the radio wave intensity acquiring unit when the mobile terminal receives the signal; and the radio wave intensity, acquired by the quality data acquiring unit, of the area corresponding to the position of the mobile terminal. The correction candidate area specifying unit specifies an area where the difference between the two radio wave intensities is within the predetermined threshold value as the correction candidate area among areas in the case where the interior of the service area acquired by the quality data acquiring unit is divided into areas with the same radio wave intensities, respectively. In the case where the correction candidate area specified by the correction candidate area specifying unit is present at the position on the arc, the position correcting unit corrects the position of the mobile terminal estimated by the position estimating unit to the position on the arc within the correction candidate area.

This suppresses an error of the location information generated in the transverse direction with respect to the direction from the base station toward the barycentric position of the cell of the base station. Accordingly, the position of the mobile terminal can be accurately estimated regardless of the position of the mobile terminal within the cell.

### Brief Description of the Drawings

FIG. 1 is a system configuration diagram illustrating a system configuration of a wireless communication network system 10 including a base station positioning function unit 60 according to the present embodiment;
FIG. 2 is a block diagram illustrating a functional configuration of the base station positioning function unit 60 provided in an E-SMLC 44;
FIG. 3 is a first schematic diagram illustrating a procedure for estimating a position of a mobile terminal in a time-of-arrival positioning method;
FIG. 4 is a second schematic diagram illustrating the procedure for estimating the position of the mobile terminal in the time-of-arrival positioning method;
FIG. 5 is a third schematic diagram illustrating the procedure for estimating the position of the mobile terminal in the time-of-arrival positioning method;
FIG. 6 is a schematic diagram illustrating another example of the procedure in FIG. 5;
FIG. 7 is a schematic diagram illustrating further another example of the procedure in FIG. 5;
FIG. 8 is a first sequence diagram illustrating the overall procedure of a positioning operation process in the time-of-arrival positioning method, which is performed by respective devices constituting the wireless communication network system 10 including the base station positioning function unit 60;
FIG. 9 is a second sequence diagram illustrating the overall procedure of the positioning operation process in the time-of-arrival positioning method, which is performed by the respective devices constituting the wireless communication network system 10 including the base station positioning function unit 60;
FIG. 10 is a flowchart illustrating a procedure of a position estimation process, which is performed by the base station positioning function unit 60 included in the wireless communication network system 10;
FIG. 11 is a flowchart illustrating a procedure of a position correction process, which is performed by the base station positioning function unit 60 included in the wireless communication network system 10;
FIG. 12 is a schematic diagram illustrating the case where it is determined whether or not the process is performed depending on the length of a time of arrival;
FIG. 13 is a flowchart illustrating the procedure of the position correction process performed by the base station positioning function unit 60 in the case of FIG. 12;
FIG. 14 is a first schematic diagram illustrating a procedure for estimating a position of a mobile terminal in the time-of-arrival positioning method; and
FIG. 15 is a second schematic diagram illustrating the procedure for estimating the position of the mobile terminal in the time-of-arrival positioning method.

### Description of Embodiments

Hereinafter, embodiments of a base station positioning apparatus of the present invention will now be described in detail with reference to the accompanying drawings.

### (System configuration of a wireless communication network system 10)

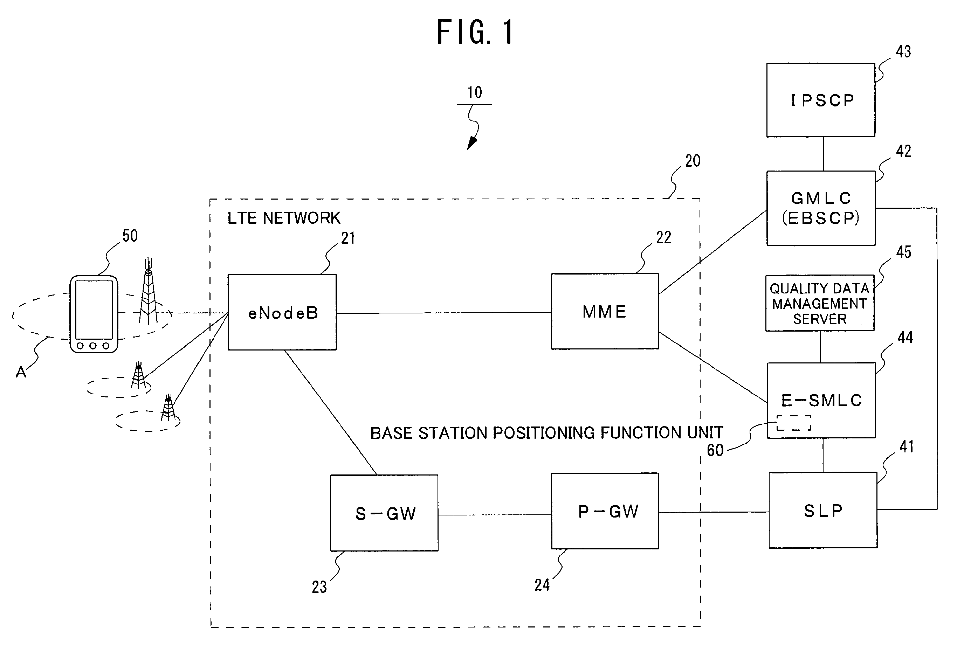

Firstly, with reference to FIG. 1, a description will be given of the overall system configuration of the wireless communication network system 10 including a base station positioning function unit 60 according to the present embodiment.

FIG. 1 is a system configuration diagram illustrating the system configuration of the wireless communication network system 10 including the base station positioning function unit 60 according to the present embodiment. The wireless communication network system 10 illustrated in FIG. 1 includes, in this example, respective devices constituting a Long Term Evolution (LTE) network 20, respective devices that mainly perform a positioning operation process, and a Mobile Terminal (MT) 50, which is a mobile terminal owned by a user. The MT 50 is a positioning target. Here, the present invention is applicable not only to the LTE network but also to a 3rd Generation (3G) network. In this example, a description will be given of the case where the present invention is applied to the LTE network.

Firstly, in the wireless communication network system 10, an eNodeB 21, a mobility management entity (MME) 22, a serving-gateway (S-GW) 23, and a PDN-gateway (P-GW) 24 are provided as the respective devices constituting the LTE network 20.

The eNodeB 21 is a network base station in the LTE network 20, and wirelessly connected to the MT 50. For example, a cell "A" is one of cells of the eNodeB 21.

The MME 22 performs mobility (movement) management of the MT 50 that moves within the service area, security control (authentication), a process for setting a transmission path of user data between the eNodeB 21 and the S-GW 23, and the like.

The S-GW 23 is a service area packet gateway device that transmits user data. The S-GW 23 covers the LTE network 20, a 3G network, not illustrated, or the like so as to transmit the user data, and functions as a switching point during the transmission of the user data to the LTE network 20, the 3G network, or the like.

The P-GW 24 is a gateway device that assigns IP addresses and covers wireless access of the 3rd generation partnership project (3GPP) and the non-3GPP. The P-GW 24 functions as a connection point with a packet network (PDN: Public Data Network) other than a core network, for example, the IP Multimedia Subsystem (IMS) providing an Internet access service to mobile phones and an audio service through a packet network.

Furthermore, in the wireless communication network system 10, there are provided a SUPL Location Platform (SLP) 41, a Gateway Mobile Location Center (GMLC (EBSCP: External Business User Service Control Point)) 42, an IP Service Control Point (IPSCP) 43, an Evolved Serving Mobile Location Center (E-SMLC) 44, and a quality data management server device 45, as the respective devices for performing the positioning operation process other than the respective devices for constituting the LTE network 20.

The SLP 41 performs user authentication, and establishes a secure environment between the MT 50 and the SLP 41. Subsequently, the SLP 41 uses acquired GPS data to generate assist data (approximate location information) required for performing the positioning operation process.

The GMLC (EBSCP) 42 is a gateway device for providing other devices with location information (latitude-longitude information) of the MT 50, which is the positioning target.

In this example, for convenience of illustration, the SLP 41 and the GMLC 42 are indicated as being realized by separate devices. However, these devices may be achieved by the same device. Regarding the other components in the drawing, several components are not necessarily realized by separate devices, and may be realized by the same device.

The IPSCP 43 is an IP service control device that manages contract (subscriber) information in addition to New Mobile Service Control Point (NMSCP), not illustrated, and provides a service to the user.

The E-SMLC 44 is a server device that performs the positioning operation process, that is, a positioning operation server device. In a case where the present invention is applied to the 3G network, a Radio Network Controller (RNC) performs a process performed in the E-SMLC 44.

The quality data management server device 45 is a server device that manages quality data including the radio wave intensity and the like for each unit area in the case where the interior of the service area of the wireless communication network system 10 is divided into areas with the same radio wave intensities, respectively. The quality data management server device 45 performs, for example, a GPS positioning operation process in the GPS positioning method and stores quality data including longitude and latitude of the MT 50 acquired in the GPS positioning operation process, RSRP of the signal at the MT 50, an identifier (a cell ID) for identifying the cell, and the like in the wireless communication network system 10. When the interior of the service area is divided into predetermined unit areas with the same radio wave intensities, respectively, for example, the interior of the service area can be divided by varying the size of area for each area such as an urban area, a mountain area, or the like. That is, the quality data including the RSRP, the cell ID, and the like varies for each predetermined unit area.

The RSRP is stored as, for example, "X (dBm) ", "Y (dBm) ", or the like, or is stored as "Level A", "Level B", or the like corresponding to the level of the intensity in each unit of predetermined area.

In the above-described E-SMLC 44, the base station positioning apparatus of the present invention is provided as, for example, the base station positioning function unit 60. The base station positioning function unit 60 performs the positioning operation process by the time-of-arrival positioning in the base station positioning. The base station positioning function unit 60 firstly performs a position estimation process for estimating the position of the MT 50 in a process of the positioning operation process. Furthermore, the base station positioning function unit 60 performs a position correction process for correcting the position of the MT 50 estimated by the position estimation process. The respective functions of the base station positioning function unit 60 are incorporated into a control program of the device such as the E-SMLC 44 as, for example, a base station positioning program. The above-described device executes the base station positioning program to thereby enable the positioning operation process and the position correction process.

### (Functional configuration of the base station positioning function unit 60)

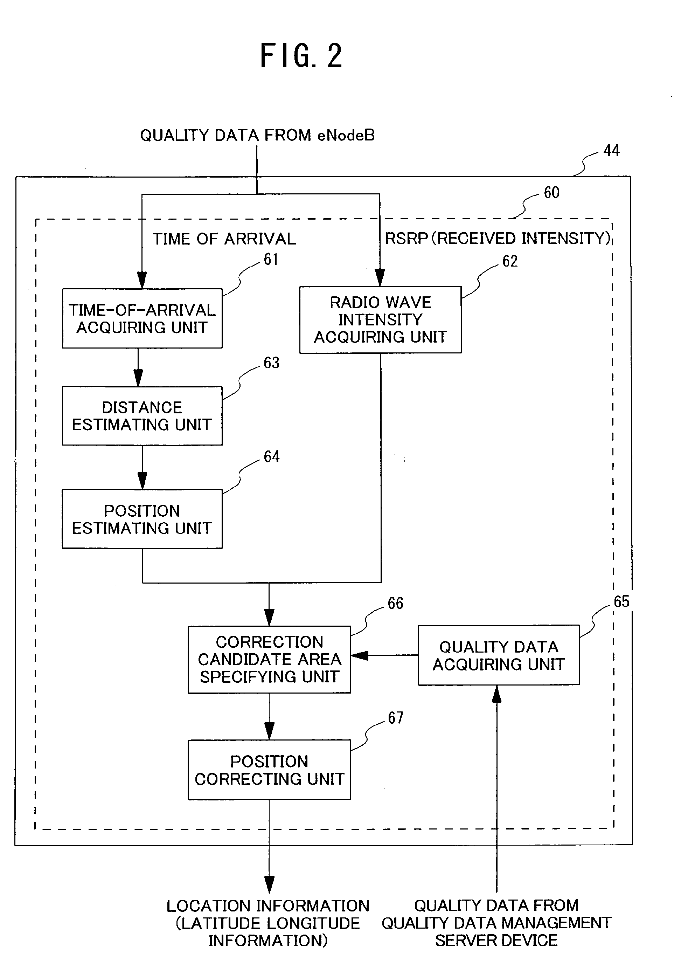

Next, with reference to FIG. 2, a description will be given of a functional configuration of the base station positioning function unit 60 provided in the E-SMLC 44 of the wireless communication network system 10 according to the present embodiment.

FIG. 2 is a block diagram illustrating the functional configuration of the base station positioning function unit 60 provided in the E-SMLC 44. The E-SMLC 44 illustrated in FIG. 2 includes the respective functional units provided in the base station positioning function unit 60 that performs the time-of-arrival positioning, which is one of the base station positioning operation processes, and corrects the result of the positioning operation. General functional units provided in the E-SMLC 44 other than the respective functional units provided in the base station positioning function unit 60 are not illustrated, and the explanations thereof is omitted.

The base station positioning function unit 60 includes a time-of-arrival acquiring unit 61, a radio wave intensity acquiring unit 62, a distance estimating unit 63, a position estimating unit 64, a quality data acquiring unit 65, a correction candidate area specifying unit 66, and a position correcting unit 67.

The time-of-arrival acquiring unit 61 acquires the time of arrival of the signal measured by transmitting and receiving the signal between the eNodeB 21 and the MT 50 that constitute the wireless communication network system 10. The time of arrival is one of the quality data acquired by the positioning operation process in the base station positioning method. The time of arrival can be calculated based on the outward time and return time of the radio wave transmitted and received between the eNodeB 21 and MT 50.

The radio wave intensity acquiring unit 62 acquires the RSRP when the MT 50 receives the signal. This RSRP has been transmitted from the MT 50 to the eNodeB 21. This RSRP is one of the quality data as described in Background Art. The RSRP indicates intensity of the radio wave when the MT 50 receives the signal transmitted from the eNodeB 21, which is the serving base station, to the MT 50.

The distance estimating unit 63 estimates a distance from the position of the eNodeB 21 to the position of the MT 50 based on the time of arrival acquired by the time-of-arrival acquiring unit 61. The longer the distance from the position of the eNodeB 21 to the position of the MT 50, the longer the time of arrival. Accordingly, the distance estimating unit 63 estimates the distance from the position of the eNodeB 21 to the position of the MT 50 based on the time of arrival.

The position estimating unit 64 specifies an arc that has the center at the position of the eNodeB 21 and a radius that is the distance estimated by the distance estimating unit 63. Furthermore, the position estimating unit 64 specifies a straight line connecting the position of the eNodeB 21 and the barycentric position of the cell of the base station together. Furthermore, the position estimating unit 64 specifies the intersection point of the arc and the straight line, and estimates the position of the intersection point as the position of the MT 50. Then, the position estimating unit 64 outputs the latitude-longitude information indicating the latitude and the longitude, or the like corresponding to the position of the MT 50, as the location information indicating the position of the MT 50.

The quality data acquiring unit 65 acquires from the quality data management server device 45 described above the quality data including the RSRP and the like for each area in the case where the interior of the service area of the wireless communication network system 10 is divided into areas with the same radio wave intensities, respectively.

The correction candidate area specifying unit 66 calculates the difference between: a RSRP for each area acquired by the quality data acquiring unit 65, in the case where the interior of the service area is divided into areas with the same radio wave intensities; and a RSRP received by the radio wave intensity acquiring unit 62, when the MT 50 receives the signal. The correction candidate area specifying unit 66 specifies an area where the difference between the two RSRPs is within a predetermined threshold value as a correction candidate area among areas in the case where the interior of the service area of the wireless communication network system 10 is divided into areas with the same radio wave intensities.

That is, the correction candidate area is an area where the RSRP for each area is the same as the RSRP when the MT 50 receives the signal or comparatively close to the RSRP when the MT 50 receives the signal among areas in the case where the interior of the service area of the wireless communication network system 10 is divided into areas with the same radio wave intensities. Accordingly, the correction candidate area is an area with the high possibility that the MT 50 is present.

The position correcting unit 67 corrects the position of the MT 50 estimated by the position estimating unit 64 to the position on the arc within the correction candidate area in the case where the correction candidate area specified by the correction candidate area specifying unit 66 is present at the position on the arc.

### (Outline of the procedure for estimating the position of the mobile terminal in the time-of-arrival positioning method)

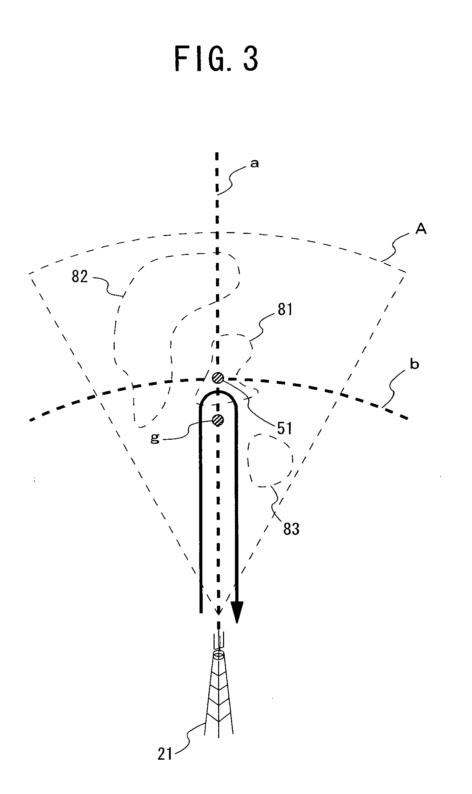

Next, with reference to FIG. 3 to FIG. 5, a description will be given of the outline of the procedure for estimating the position of the mobile terminal in the time-of-arrival positioning method.

FIG. 3 to FIG. 7 are schematic diagrams illustrating the procedure for estimating the position of the mobile terminal in the time-of-arrival positioning method.

As described in Background Art, as illustrated in FIG. 3, the E-SMLC 44 having the base station positioning function unit 60 firstly calculates the difference between the RSRP of the cell of the eNodeB 21 as the serving base station, which is the base station in the service area, the eNodeB 21, not illustrated, and the RSRP of the cell of an adjacent base station, which is a base station adjacent to the eNodeB 21. Subsequently, the E-SMLC 44 estimates a position 51 of the MT 50 based on the time of arrival at the cell "A" of the eNodeB 21 as described with reference to FIG. 14 if there is no cell of the adjacent base station that the difference between the two calculated RSRPs is within the threshold value. Here, the quality data acquiring unit 65 acquires the RSRP for each area in the case where the interior of the service area of the wireless communication network system 10 is divided into areas with the same radio wave intensities. Subsequently, the correction candidate area specifying unit 66 calculates the difference between: the RSRP for each area acquired by the quality data acquiring unit 65, in the case where the interior of the service area is divided into areas with the same radio wave intensities; and the RSRP received by the radio wave intensity acquiring unit 62, when the MT 50 receives the signal. The correction candidate area specifying unit 66 specifies the area where the difference between the two RSRPs is within the predetermined threshold value, as the correction candidate area among areas in the case where the interior of the service area of the wireless communication network system 10 is divided into areas with the same radio wave intensities.

Here, the correction candidate area specifying unit 66 is assumed to specify areas 82 and 83 as the correction candidate areas among the areas in the case where the interior of the service area is divided into areas with the same radio wave intensities. These areas 82 and 83 are different in size and shape depending on the RSRP of the area. Here, the correction candidate area specifying unit 66 is assumed not to specify an area 81 as the correction candidate area since the difference between the two RSRPs is not within a predetermined threshold value.

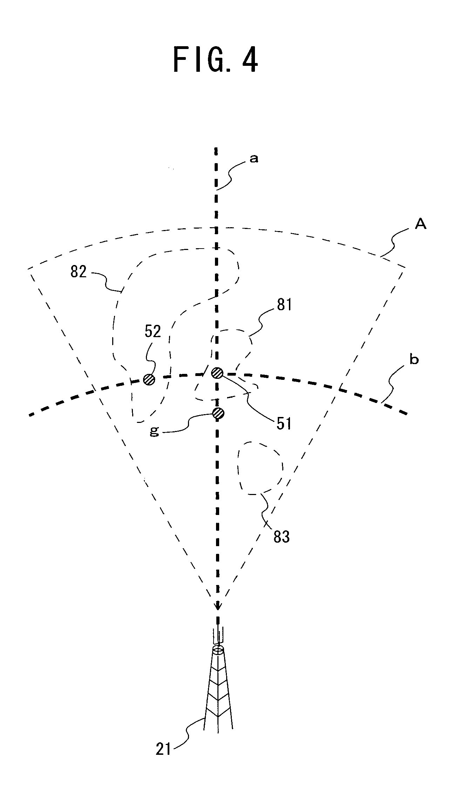

At this time, the area 83, which is one of the correction candidate areas, specified by the correction candidate area specifying unit 66 is not present at the position on the arc "b". Since the arc "b" is not present at the area 83, as illustrated in FIG. 4, the position correcting unit 67 does not correct the position 51 of the MT 50 estimated by the position estimating unit 64 to a position within the correction candidate area (the area 83). On the other hand, the area 82, which is a correction candidate area different from the area 83, specified by the correction candidate area specifying unit 66 is present at the position on the arc "b" . Therefore, the position correcting unit 67 corrects the position 51 of the MT 50 estimated by the position estimating unit 64 to a position 52 on the arc "b" within the correction candidate area (the area 82).

Accordingly, in the case where the MT 50 is not present at a position on the straight line "a", the position of the MT 50 might not be accurately estimated unlike the case where the MT 50 is present at a position on the straight line "a". That is, the position of the MT 50 estimated in the time-of-arrival positioning method may have an error generated in the transverse direction (the direction indicated by the arrow "d" in FIG. 15) of the arc "b" with respect to the direction (the direction indicated by the arrow "c" in FIG. 15) of the straight line "a" passing from the eNodeB 21 through the two points of the barycentric position "g" of the cell "A" and the position of the eNodeB 21.

However, the position of the MT 50 can be accurately estimated regardless of the position of the MT 50 within the cell "A" by correcting the error generated in the transverse direction of the arc "b" as described above.

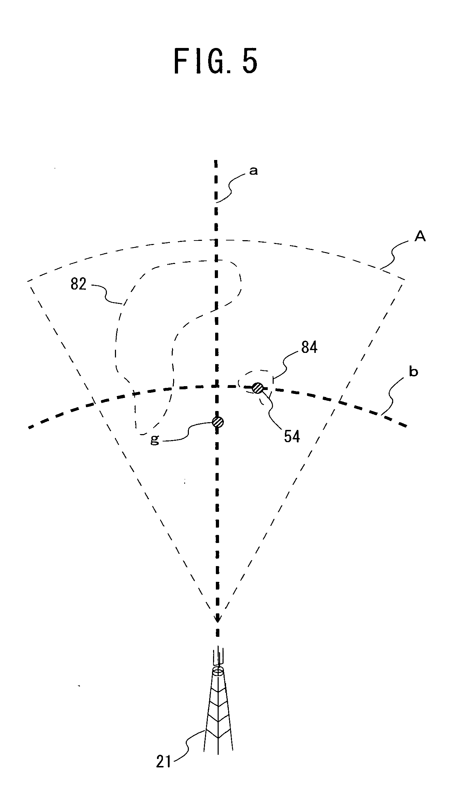

As illustrated in FIG. 5, it is assumed that in addition to the area 82, an area 84 that has the same RSRP as the RSRP of the area 82 is present. Therefore, the correction candidate area specifying unit 64 specifies the area 84 as the correction candidate area as well as the area 82. In this manner, in some cases, not only one area but also several correction candidate areas specified by the correction candidate area specifying unit 66 are present at the position on the arc "b".

In this case, as one example, the position of the MT 50 estimated by the position estimating unit 64 can be corrected to a position 54 on the arc "b" within the correction candidate area (the area 84) at the closest distance from the estimated position of the MT 50. Therefore, as illustrated in FIG. 4, the position correcting unit 67 does not correct the estimated position 51 of the MT 50 to the position 52 on the arc "b" within the correction candidate area (the area 82).

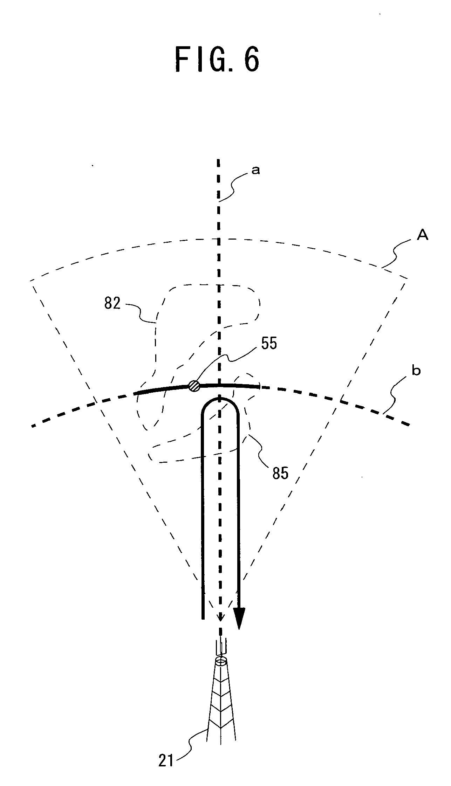

As another example, as illustrated in FIG. 6, the position of the MT 50 estimated by the position estimating unit 64 can be corrected to a position 55 at the center on the arc connecting respective ends of several correction candidate areas 82 and 85 together.

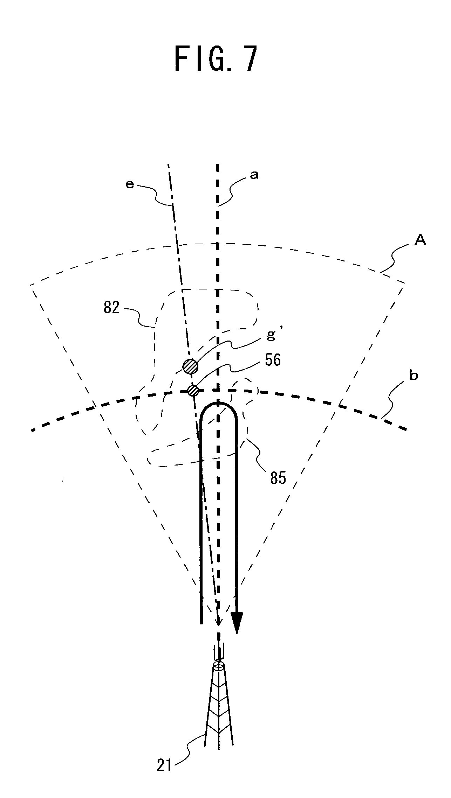

Furthermore, as another example, as illustrated in FIG. 7, the position of the MT 50 estimated by the position estimating unit 64 can be corrected to a position 56 of the intersection point between: the straight line (one dot chain line) "e" connecting the center of gravity g' in an area combining several correction candidate areas 82 and 85 and the position of the eNodeB 21 together; and an arc "A".

### (Procedure of the overall time-of-arrival positioning operation process)

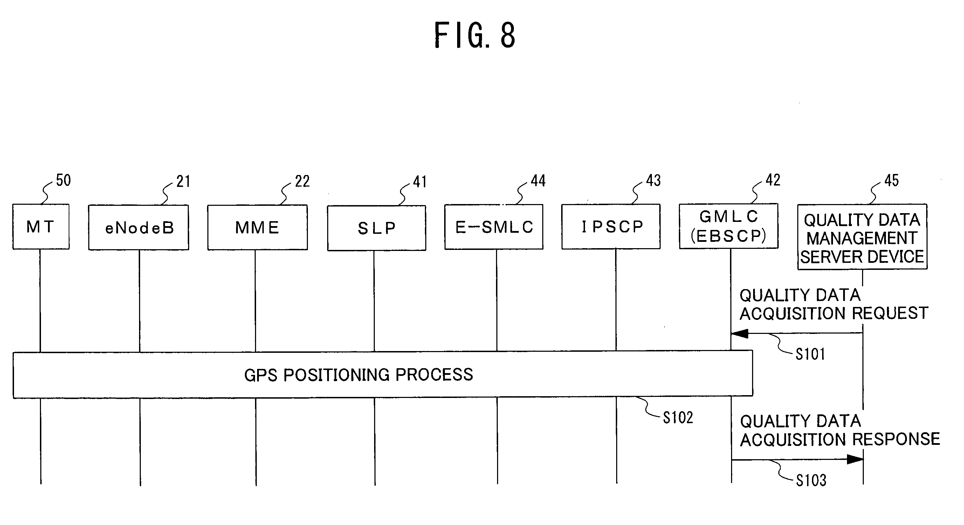

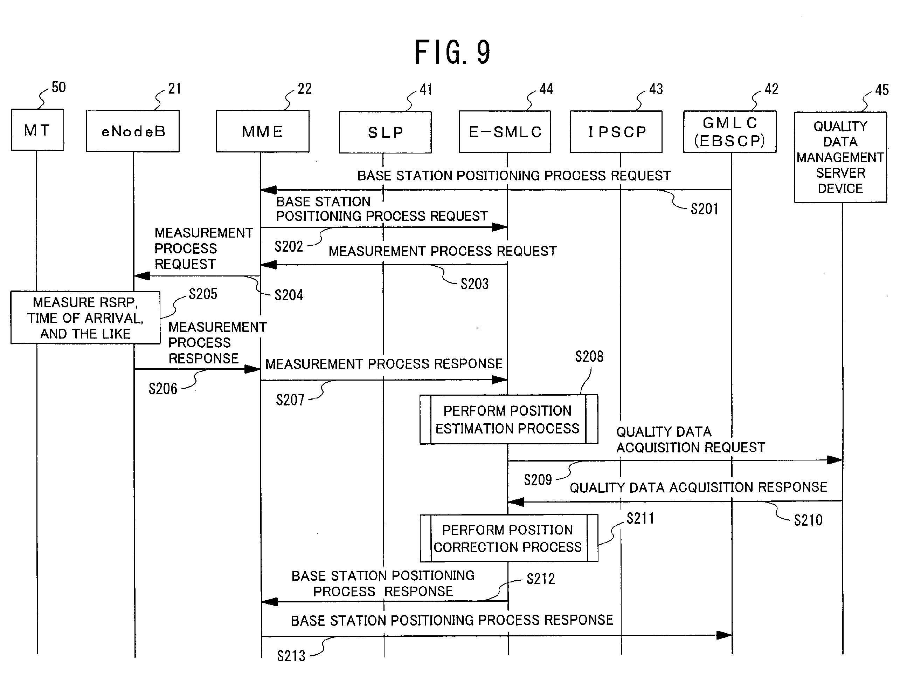

Next, with reference to FIG. 8 and FIG. 9, a description will be given of the overall flow of the positioning operation process in the time-of-arrival positioning method, which is performed by the base station positioning function unit 60 included in the wireless communication network system 10.

FIG. 8 and FIG. 9 are sequence diagrams illustrating the overall flow of the positioning operation process in the time-of-arrival positioning method, which is performed by the respective devices constituting the wireless communication network system 10 including the base station positioning function unit 60.

Firstly, it is necessary to store the quality data beforehand in the quality data management server device 45. Therefore, the quality data management server device 45 periodically updates the quality data. Firstly, as illustrated in FIG. 8, a quality data acquisition request is transmitted to the GMLC (EBSCP) 42 (step S101). Subsequently, the positioning operation process is performed, for example, in the GPS positioning method between the illustrated respective devices from the MT 50 to the GMLC (EBSCP) 42 in the wireless communication network system 10. Subsequently, the respective devices constituting the wireless communication network system 10 acquire the quality data including the longitude and latitude of the MT 50 acquired by the positioning operation process, the RSRP of the signal at the MT 50, the identifier (the cell ID) for identifying the cell, and the like (step S102).

The respective devices constituting the wireless communication network system 10 transmits a quality data acquisition response to the quality data management server device 45, which is a request source, when the positioning operation process is completed (step S103). Here, the respective devices constituting the wireless communication network system 10 also transmits the quality data acquired by step S102 when transmitting the quality data acquisition response. Accordingly, the quality data management server device 45 manages the quality data including the RSRP and the like for each area in the case where the interior of the service area of the wireless communication network system 10 is divided into areas with the same radio wave intensities.

It is to be noted that the case of FIG. 8 is the case where the quality data management server device 45 periodically collects the location information and the quality data. Without limiting to this case, when the MT 50 autonomously performs the GPS positioning, the GMLC 42 may collect the quality data and notify the quality data management server device 45. In this case, it is unnecessary to transmit a quality data acquisition request from the quality data management server device 45 to the GMLC 42 (step S101).

Next, as illustrated in FIG. 9, the GMLC (EBSCP) 42 firstly transmits a base station positioning request as a request for performing the base station positioning to the MME 22 (step S201). Subsequently, the MME 22 transmits a base station positioning request to the E-SMLC 44 (step S202).

Here, the E-SMLC 44 transmits a measurement process request for measuring the quality data including the RSRP at the MT 50, the time of arrival and the like between the MT 50 and the eNodeB 21 to the MME 22 (step S203). Furthermore, the MME 22 transmits a measurement process request to the eNodeB 21 (step S204). The eNodeB 21 measures the quality data including the RSRP, the time of arrival of the radio wave, and the like between the MT 50 and the eNodeB 21 when receiving the measurement process request (step S205).

The eNodeB 21 transmits a measurement process response as a response to the measurement process request to the MME 22 when the measurement of the quality data is completed (step S206) . At this time, the eNodeB 21 transmits the quality data including the RSRP, the time of arrival, and the like measured by the above-described the measurement process of the quality data, together with the measurement process response. Furthermore, the MME 22 transmits the measured quality data to the E-SMLC 44 (step S207).

Subsequently, the E-SMLC 44 receives the quality data including the RSRP, the time of arrival of the radio wave, and the like from the eNodeB 21 through the MME 22. Then, the E-SMLC 44 performs the position estimation process based on the time of arrival or the like, which is one of the received quality data (step S208). A description will be given of the flow of the position estimation process in step S208 in detail below.

Subsequently, the E-SMLC 44 transmits a quality data acquisition request to the quality data management server device 45 to acquire the quality data managed by the quality data management server device 45 (step S209). Then, the quality data management server device 45 transmits the quality data including the RSRP and the like requested by the E-SMLC 44 as a quality data acquisition response to the E-SMLC 44, which is the request source (step S210).

The E-SMLC 44 corrects the position of the MT 50 estimated here if it is necessity to correct the position of the MT 50 estimated by the processing steps of step S208, based on the quality data acquired from the quality data management server device 45 in the manner described in the schematic diagrams of FIG. 3 to FIG. 7 (step S211). Also, a description will be given of the flow of the position correction process in step S211 in detail below.

Finally, the E-SMLC 44 transmits a base station positioning response as a response to the base station positioning request to the MME 22 (step S212). Here, the location information (the latitude-longitude information) transmitted together with the base station positioning response is the location information (the latitude-longitude information) of the MT 50 estimated by the processing steps of the step S208, or the location information (the latitude-longitude information) of the MT 50 corrected by the processing steps of step S211. Furthermore, the MME 22 transmits the base station positioning response to the GMLC (EBSCP) 42 (step S213).

Thus, all processes of the time-of-arrival positioning operation process performed by the base station positioning function unit 60 included in the wireless communication network system 10 are completed.

### (Flow of the position estimation process)

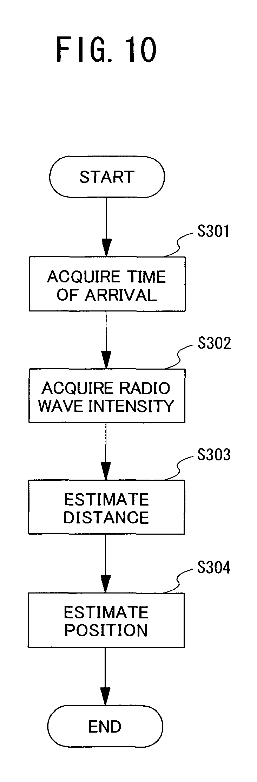

Next, with reference to FIG. 10, a description will be given of the flow of the position estimation process performed by the base station positioning function unit 60 included in the wireless communication network system 10.

FIG. 10 is a flowchart illustrating the flow of the position estimation process performed by the base station positioning function unit 60 included in the wireless communication network system 10.

As illustrated in FIG. 10, the time-of-arrival acquiring unit 61 firstly acquires the time of arrival of the signal transmitted and received between the eNodeB 21 and MT 50, which constitute the wireless communication network system 10, as the quality data (step S301). The radio wave intensity acquiring unit 62 acquires the RSRP transmitted from the MT 50 to the eNodeB 21, when the MT 50 receives the signal as the quality data (step S302).

Here, the distance estimating unit 63 estimates the distance from the position of the eNodeB 21 to the position of the MT 50 based on the time of arrival acquired by the time-of-arrival acquiring unit 61 (step S303). Subsequently, the position estimating unit 64 specifies an arc that has the center at the position of the eNodeB 21 and a radius that is the distance estimated by the distance estimating unit 63. Furthermore, the position estimating unit 64 specifies a straight line connecting the position of the eNodeB 21 and the barycentric position of the cell of this base station. Finally, the position estimating unit 64 specifies the intersection point between the specified arc and straight line and then estimates the position of the specified intersection point as the position of the MT 50 (step S304). Accordingly, all processes of the position estimation process performed by the base station positioning function unit 60, are completed.

### (Flow of the position correction process)

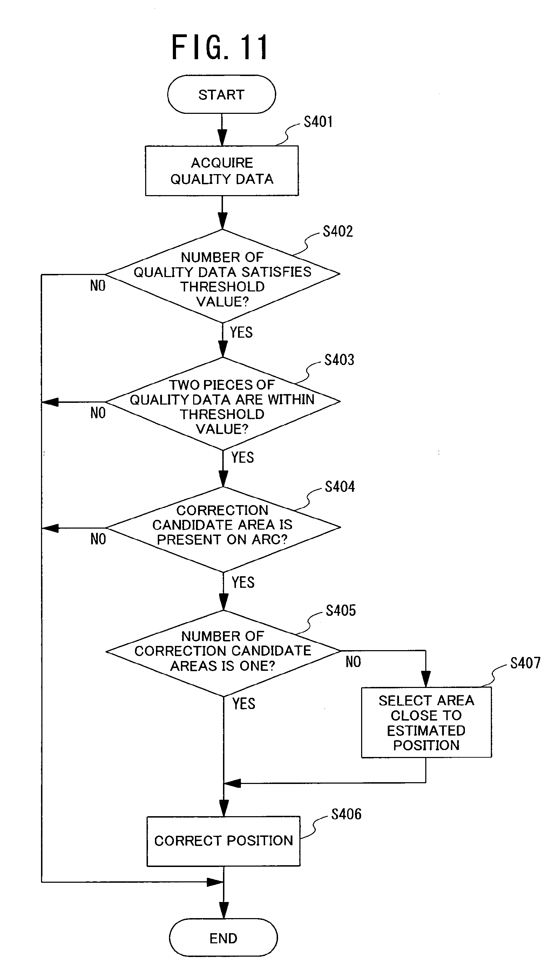

Next, with reference to FIG. 11, a description will be given of the flow of the position correction process performed by the base station positioning function unit 60 included in the wireless communication network system 10.

FIG. 11 is a flowchart illustrating the flow of the position correction process performed by the base station positioning function unit 60 included in the wireless communication network system 10.

As illustrated in FIG. 11, the quality data acquiring unit 65 firstly acquires the quality data including the RSRP and the like for each area in the case where the interior of the service area of the wireless communication network system 10 is divided into areas with the same radio wave intensities before correction of the position of the MT 50 estimated by the position estimating unit 64 (step S401). Here, the quality data acquiring unit 65 can acquire at one time several RSRPs corresponding to the area of the eNodeB 21 for each point obtained by further subdividing the above-described area.

Therefore, the quality data acquiring unit 65 determines whether or not the number of the RSRPs (that is, the number of samples) exceeds a predetermined threshold value when acquiring the RSRPs corresponding to the area of the eNodeB 21, which is the serving base station that includes the MT 50 in its service area, among areas in the case where the interior of the service area is divided into areas with the same radio wave intensities. In the case where the number of samples of the RSRPs corresponding to the area of the eNodeB 21, which is the serving base station that includes the MT 50 in its service area, does not reach the predetermined threshold value (NO in step S402), the position correcting unit 67 does not correct the position of the MT 50 estimated by the position estimating unit 64 by using the value of the RSRP. In the case where the number of samples is insufficient and is smaller than the predetermined threshold value, the position of the MT 50 is not corrected since the number of samples is insufficient to estimate the correction candidate area. Accordingly, in the case where the number of samples is insufficient and is smaller than the predetermined threshold value, the position of the MT 50 estimated by the position estimating unit 64 is used as the final positioning result without change.

In the case where the number of the RSRP corresponding to the area of the eNodeB 21, which is the serving base station that includes the MT 50 in its service area, reaches the predetermined threshold value (YES in step S402), the process proceeds to the next processing step.

The correction candidate area specifying unit 66 calculates the difference between: the RSRP for each area acquired by the quality data acquiring unit 65, in the case where the interior of the service area is divided into areas with the same radio wave intensities; and the RSRP received by the radio wave intensity acquiring unit 62, when the MT 50 receives the signal. Subsequently, the correction candidate area specifying unit 66 specifies an area where the difference between the two RSRPs is within a predetermined threshold value as the correction candidate area among areas in the case where the interior of the service area of the wireless communication network system 10 is divided into areas with the same radio wave intensities, respectively. The threshold value used here is a threshold value for specifying the correction candidate area, and is a threshold value different from the above-described threshold value in the determination process in step S402.

As a result, in the case where the correction candidate area is not present within areas in the case where the interior of the service area of the wireless communication network system 10 is divided into areas with the same radio wave intensities (NO in step S403), the position correcting unit 67 cannot correct the position of the MT 50 estimated by the position estimating unit 64 to the position on the arc within the correction candidate area. Accordingly, the position of the MT 50 estimated by the position estimating unit 64 is used as the final positioning result without change.

On the other hand, in the process of step S403, when the correction candidate area is present within areas in the case where the interior of the service area of the wireless communication network system 10 is divided into areas with the same radio wave intensities (YES in step S403), respectively, the position correcting unit 67 can correct the position of the MT 50 estimated by the position estimating unit 64 to the position on the arc within the correction candidate area.

Subsequently, in the case where the correction candidate area specified by the correction candidate area specifying unit 66 is present at the position on the arc (YES in step S404), and only one correction candidate area is specified by the correction candidate area specifying unit 66 (YES in step S405), the position correcting unit 67 corrects the position of the MT 50 estimated by the position estimating unit 64 to the position on the arc within the correction candidate area (step S406). Accordingly, the position of the MT 50 corrected by the position estimating unit 64 is used as the final positioning result.

In the process of step S404, in the case where the correction candidate area specified by the correction candidate area specifying unit 66 is not present at the position on the arc (NO in step S404), the position correcting unit 67 cannot correct the position of the MT 50 estimated by the position estimating unit 64 to the position on the arc within the correction candidate area. Accordingly, the position of the MT 50 estimated by the position estimating unit 64 is used as the final positioning result.

In the process of step S405, in the case where the correction candidate area specified by the correction candidate area specifying unit 66 is not the only one correction candidate area (i.e. there are several correction candidate areas) present at the position on the arc (NO in step S405), the position correcting unit 67 corrects the position of the MT 50 estimated by the position estimating unit 64 as described with reference to each of FIG. 5, FIG. 6, and FIG. 7 (step S406). That is, in the case of FIG. 5, the position of the MT 50 estimated by the position estimating unit 64 is corrected to the position on the arc within the correction candidate area at the closest distance from the estimated position of the MT 50. In the case of FIG. 6, the position of the MT 50 estimated by the position estimating unit 64 is corrected to the position 55 at the center on the arc connecting the respective ends of several correction candidate areas. Further, in the case of FIG. 7, the position of the MT 50 estimated by the position estimating unit 64 is corrected to the position 56 of the intersection point between: the straight line (one dot chain line) "e" connecting the center of gravity in the area combining several correction candidate areas and the eNodeB 21 together; and the arc "A" . Accordingly, the position of the MT 50 corrected by the position estimating unit 64 is used as the final positioning result. Thus, all processes of the position correction process are completed.

### (Summary of the description of the base station positioning function unit 60 included in the wireless communication network system 10 according to the embodiment)

As described above, in the base station positioning function unit 60 included in the wireless communication network system 10, the position of the mobile terminal is estimated. Further, the estimated position of the mobile terminal is corrected.

The correction candidate area specifying unit 66 calculates the difference between: the RSRP for each area acquired by the quality data acquiring unit 65 in the case where the interior of the service area is divided into areas with the same radio wave intensities; and the RSRP received by the radio wave intensity acquiring unit 62 when the MT 50 receives the signal. Subsequently, the correction candidate area specifying unit 66 specifies the area where the difference between the two RSRPs is within a predetermined threshold value as the correction candidate area among areas in the case where the interior of the service area of the wireless communication network system 10 is divided into areas with the same radio wave intensities. Subsequently, in the case where the correction candidate area specified by the correction candidate area specifying unit 66 is present at the position on the arc, the position correcting unit 67 corrects the position of the MT 50 estimated by the position estimating unit 64 to the position on the arc within the correction candidate area.

Accordingly, the correction of the estimated position of the mobile terminal can reduce the error of the location information generated in the transverse direction with respect to the direction from the eNodeB 21 toward the barycentric position of the cell "A". This can accurately estimate the position of the MT 50 regardless of the position of the MT 50 within the cell "A" of the eNodeB 21.

### Modifications to the Embodiments

Now, in the case where the time of arrival is sufficiently short, it is estimated that the amount of error along the arc in the transverse direction is small. Accordingly, for example, the above-described method may not be used in the case where the time of arrival is shorter than the predetermined threshold value. Instead, the above-described method may be used in the case where the time of arrival exceeds the predetermined threshold value.

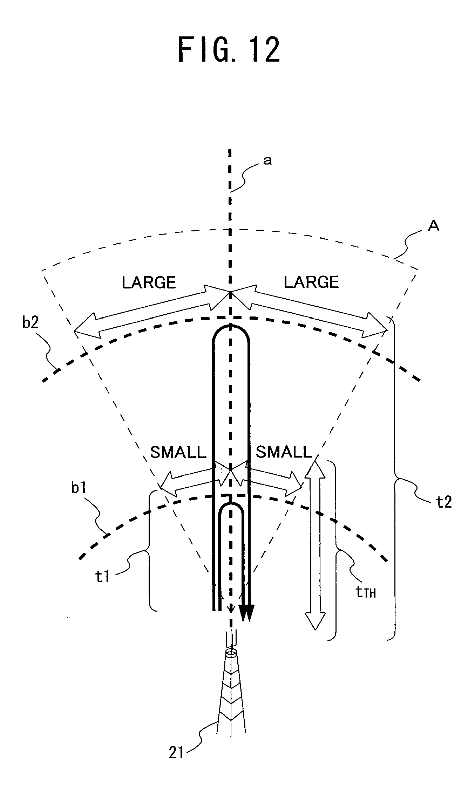

That is, as illustrated in FIG. 12, in the case where the time of arrival is a time t1 shorter than a threshold value tTH, the mobile terminal is positioned adjacent to the eNodeB 21 and the error along the arc b1 in the transverse direction is small. Accordingly, in this case, the above-described position correction using the RSRP is not necessary.

On the other hand, in the case where the time of arrival is a time t2 equal to or greater than the threshold value tTH, the error along the arc b2 in the transverse direction is large. Accordingly, in this case, it is effective to perform the position correction by mapping with the RSRP as described above.

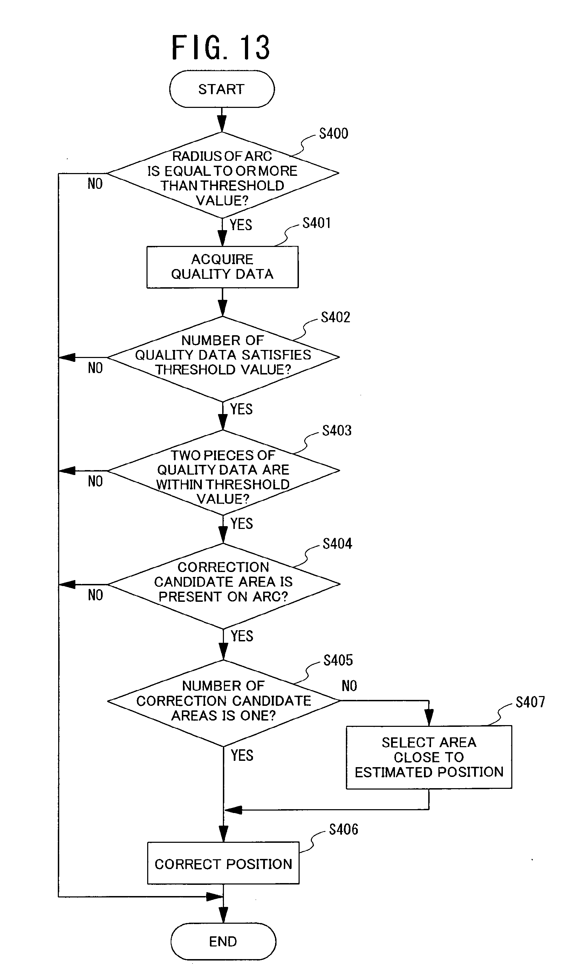

As described above, in the case where a threshold value is provided for determining whether or not the process is performed depending on the length of the time of arrival, as illustrated in FIG. 13, it is determined whether the radius of the arc (that is, the time of arrival) is smaller than the predetermined threshold value before the quality data is acquired (step S400). In the case where the position of the MT 50 estimated by the position estimating unit 64 is smaller than the predetermined threshold value (NO in step S400), the position of the MT 50 estimated by the position estimating unit 64 is not corrected. Accordingly, the position of the MT 50 estimated by the position estimating unit 64 is used as the final positioning result without change.

On the other hand, as a result of the determination in step S400, in the case where the radius of the arc (that is, the time of arrival) is equal to or greater than the predetermined threshold value (YES in step S400), the quality data is acquired (step S401) and the position of the MT 50 estimated by the position estimating unit 64 is corrected by the above-described method. The subsequent processes from step S402 are similar to the above-described processes, and their descriptions are omitted. However, these processes are only examples. That is, in the case where there are several correction candidate areas specified by the correction candidate area specifying unit 66, the correction is performed as described with reference to each of FIG. 5, FIG. 6, and FIG. 7.

### (Scope and spirit of the present invention)

The scope and spirit of the present invention are not limited to the illustrated and described exemplified embodiments, and include all embodiments that bring about the equivalent advantages subjected to the present invention. The scope and spirit of the present invention are not limited to a combination of the features of the present invention set forth in respective claims, but can be defined by all desired combinations of specific features among all of individual disclosed features.

As one example, in the base station positioning apparatus described in the present embodiment, the wireless communication network system 10 is the LTE network 20. However, the present invention is not limited to this. As one example, the wireless communication network system 10 may be, for example, a wireless communication network system where the LTE network 20 and the 3G network are present. Even if the device configuration of the wireless communication network system is changed, the above-described flows of the respective processes of the base station positioning apparatus are substantially the same.

In the base station positioning apparatus described in the present embodiment, the base station positioning function unit 60, which is a functional unit as the base station positioning apparatus, is provided in the E-SMLC 44. However, the present invention is not limited to this. The base station positioning function unit 60 may be provided in a device other than the E-SMLC 44 constituting the wireless communication network system 10. Also, a functional unit provided in the base station positioning function unit 60 can be divided and provided in plural devices constituting the wireless communication network system 10. Accordingly, the functional configuration and the device configuration when the base station positioning function unit 60 is included in the wireless communication network system 10 can be arbitrarily changed depending on the configuration and the like of the wireless communication network.

### Industrial Applicability

The base station positioning apparatus, the base station positioning method, and the base station positioning program of the present invention can be provided, for example, in an E-SMLC constituting a wireless communication network system, as a base station positioning function unit that reduces an error in a transverse direction with respect to a direction from a base station toward a barycentric position of a cell of the base station when a position of a mobile terminal is estimated in the time-of-arrival positioning method.

### Reference Signs List

- 10: Wireless communication network system
- 20: LTE network
- 21: eNodeB
- 22: MME
- 23: S-GW
- 24: P-GW
- 41: SLP
- 42: GMLC (EBSCP)
- 43: IPSCP
- 44: E-SMLC
- 45: E-SMLC
- 45: Quality data management server device
- 60: Base station positioning function unit
- 61: Time-of-arrival acquiring unit
- 62: Radio wave intensity acquiring unit
- 63: Distance estimating unit
- 64: Position estimating unit
- 65: Quality data acquiring unit
- 66: Correction candidate area specifying unit
- 67: Position correcting unit

## Claims

1. A base station positioning apparatus comprising:
a time-of-arrival acquiring unit configured to acquire a time of arrival of a signal transmitted and received between a base station and a mobile terminal that constitute a wireless communication network system;
a radio wave intensity acquiring unit configured to acquire a radio wave intensity of the signal occurring when the mobile terminal receives the signal that has been transmitted to the base station from the mobile terminal;
a distance estimating unit configured to estimate a distance from a position of the base station to a position of the mobile terminal based on the time of arrival acquired by the time-of-arrival acquiring unit;
a position estimating unit configured to specify an arc that has a center at the position of the base station and a radius that is the distance estimated by the distance estimating unit, specify a straight line connecting the position of the base station and a barycentric position of a cell of the base station, and estimate a position at an intersection point between the arc and the straight line to be the position of the mobile terminal;
a quality data acquiring unit configured to acquire a radio wave intensity for each area in a case where an interior of a service area of the wireless communication network system is divided into areas with same radio wave intensities, respectively;
a correction candidate area specifying unit configured to calculate a difference between the radio wave intensity for the each area acquired by the quality data acquiring unit in the case where the interior of the service area is divided into the areas with the same radio wave intensities, and the radio wave intensity of the signal occurring when the mobile terminal receives the signal acquired by the radio wave intensity acquiring unit, and specify an area where the difference is within a predetermined threshold value as a correction candidate area; and
a position correcting unit configured to correct the position of the mobile terminal estimated by the position estimating unit to a position on the arc within the correction candidate area in a case where the correction candidate area specified by the correction candidate area specifying unit is present at a position on the arc.

2. The base station positioning apparatus according to claim 1,
wherein the correction candidate area specifying unit performs a specifying process to specify an area where the difference is within the predetermined threshold value as the correction candidate area in a case where the number of the radio wave intensities acquired by the quality data acquiring unit is equal to or greater than the predetermined threshold value, and does not perform the specifying process in a case where the number of the radio wave intensities acquired by the quality data acquiring unit is smaller than the predetermined threshold value.

3. The base station positioning apparatus according to claim 1 or 2, wherein the position correcting unit corrects the position of the mobile terminal estimated by the position estimating unit to the position on the arc within the correction candidate area at a closest distance from the position of the mobile terminal in a case where a plurality of the correction candidate areas specified by the correction candidate area specifying unit are present at positions on the arc.

4. The base station positioning apparatus according to claim 1 or 2, wherein in a case where a plurality of the correction candidate areas specified by the correction candidate area specifying unit are present at positions on the arc, the position correcting unit corrects the position of the mobile terminal estimated by the position estimating unit to the position at the center on the arc connecting respective ends of the plurality of the correction candidate areas.

5. The base station positioning apparatus according to claim 1 or 2, wherein in a case where a plurality of the correction candidate areas specified by the correction candidate area specifying unit are present at positions on the arc, the position correcting unit corrects the position of the mobile terminal estimated by the position estimating unit to the position of an intersection point between a straight line connecting a center of gravity in an area combining the plurality of the correction candidate areas and the position of the base station together, and the arc.

6. The base station positioning apparatus according to claim 1 or 2, wherein the radio wave intensity for the each area acquired by the quality data acquiring unit in the case where the interior of the service area is divided into the areas with the same radio wave intensities is acquired when a positioning operation process in a GPS (Global Positioning System) positioning method is performed.

7. A base station positioning method comprising:
acquiring a time of arrival of a signal transmitted and received between a base station and a mobile terminal that constitute a wireless communication network system;
acquiring a radio wave intensity of the signal occurring when the mobile terminal receives the signal that has been transmitted to the base station from the mobile terminal;
estimating a distance from a position of the base station to a position of the mobile terminal based on the time of arrival acquired;
specifying an arc that has a center at the position of the base station and a radius that is the distance estimated, specifying a straight line connecting the position of the base station and a barycentric position of a cell of the base station, and estimating a position at an intersection point between the arc and the straight line to be the position of the mobile terminal;
acquiring a radio wave intensity for each area in a case where an interior of a service area of the wireless communication network system is divided into areas with same radio wave intensities, respectively;
calculating a difference between the radio wave intensity for the each area acquired in the case where the interior of the service area is divided into the areas with the same radio wave intensities, and the radio wave intensity of the signal occurring when the mobile terminal receives the signal acquired, and specify an area where the difference is within a predetermined threshold value as a correction candidate area; and
correcting the position of the mobile terminal estimated to a position on the arc within the correction candidate area in a case where the correction candidate area specified is present at a position on the arc.

8. A base station positioning program that causes a computer to function as:
a time-of-arrival acquiring unit configured to acquire a time of arrival of a signal transmitted and received between a base station and a mobile terminal that constitute a wireless communication network system;
a radio wave intensity acquiring unit configured to acquire a radio wave intensity of the signal occurring when the mobile terminal receives the signal that has been transmitted to the base station from the mobile terminal;
a distance estimating unit configured to estimate a distance from a position of the base station to a position of the mobile terminal based on the time of arrival acquired by the time-of-arrival acquiring unit;
a position estimating unit configured to specify an arc that has a center at the position of the base station and a radius that is the distance estimated by the distance estimating unit, specify a straight line connecting the position of the base station and a barycentric position of a cell of the base station, and estimate a position at an intersection point between the arc and the straight line to be the position of the mobile terminal;
a quality data acquiring unit configured to acquire a radio wave intensity for each area in a case where an interior of a service area of the wireless communication network system is divided into areas with same radio wave intensities, respectively;
a correction candidate area specifying unit configured to calculate a difference between the radio wave intensity for the each area acquired by the quality data acquiring unit in the case where the interior of the service area is divided into the areas with the same radio wave intensities, and the radio wave intensity of the signal occurring when the mobile terminal receives the signal acquired by the radio wave intensity acquiring unit, and specify an area where the difference is within a predetermined threshold value as a correction candidate area; and
a position correcting unit configured to correct the position of the mobile terminal estimated by the position estimating unit to a position on the arc within the correction candidate area in a case where the correction candidate area specified by the correction candidate area specifying unit is present at a position on the arc.
